# EUROPÄISCHE PATENTSCHRIFT

(11) **EP 1 872 980 B1**
(45) Veröffentlichungstag und Bekanntmachung des Hinweises auf die Patenterteilung: **24.09.2008**
(21) Anmeldenummer: 07450100.8
(22) Anmeldetag: 04.06.2007
(51) Int. Cl.: B60C 27/10

(54) **Umlenkeinrichtung für eine Gleitschutzkette**
Switching device for a slide protection chain
Dispositif de déviation pour une chaîne antidérapante

(30) Priorität: 26.06.2006 AT 10772006
(43) Veröffentlichungstag der Anmeldung: 02.01.2008
(73) Patentinhaber: Pewag Schneeketten GMBH & Co KG, 8020 Graz (AT)
(72) Erfinder: Pengg, Ägyd, 9020 Klagenfurt (AT)
(74) Vertreter: Matschnig, Franz

(56) Entgegenhaltungen:
- AT-B- 408 635
- GB-A- 2 149 868

## Beschreibung

Die Erfindung betrifft eine Umlenkeinrichtung, insbesondere eine Umlenkrolle, für eine Gleitschutzkette mit einem in einem Gehäuse drehbar gelagerten Kettenrad für eine darin einlegbare Kette, wobei die Bewegung des Kettenrads in eine Richtung möglich, jedoch in der Gegenrichtung blockiert ist.

Umlenkeinrichtungen der genannten Art werden bei Gleitschutzketten, insbesondere Schneeketten, als Spannvorrichtungen verwendet, um nach der Montage die Gleitschutzkette zu spannen. Um ein unerwünschtes Rücklaufen der Spannkette zu vermeiden, ist die Bewegung (Drehung) der Umlenkrolle in eine Richtung blockiert, nämlich entgegen der Spannrichtung der Kette. Jedoch soll ein Weg vorgesehen sein, die Kette bei Bedarf wieder freizugeben, beispielsweise wenn die Kette abgenommen wird.

Die gattungsgemäße AT 408 635 B beschreibt die Blockierung einer Rolle, freilich in Zusammenhang mit einer Spannvorrichtung für ein darin aufgewickeltes Seil, mit einem Betätigungsglied mit drei Stellungen. Zwei miteinander drehfest verbundene Klinkenräder sind jeweils Sperrklinken zugeordnet und weisen gegenläufige Sperrrichtungen auf. Das Betätigungsglied wirkt auf die zwei Sperrklinken, wobei in einer ersten Raststellung die eine Sperrklinke in das ihr zugeordnete Klinkenrad eingreift, während in einer zweiten Raststellung die andere Sperrklinke in das ihr zugeordnete Klinkenrad eingreift, sodass die Bewegung in bzw. gegen die Spannrichtung freigegeben und in bzw. gegen die Gegenrichtung blockiert ist; in einer dritten Stellung, einer dazwischen einstellbaren Freigabestellung, greift keine der Sperrklinken ein und die Blockierung ist aufgehoben. Abgesehen von dem doppelten Klinkenrad ist diese Vorrichtung aufwändig und stellt hohe Anforderungen an die Präzision der Ausführung; außerdem ist die Bedienung durch die drei Stellungsmöglichkeiten kompliziert.

Es ist Aufgabe der Erfindung, eine Umlenkeinrichtung zu schaffen, die - was insbesondere bei der Verwendung für LKW-Reifenketten wichtig ist - eine verbesserte Sicherheit der Blockierung bietet und zudem kompakt und einfach zu bedienen ist.

Diese Aufgabe wird von einer Umlenkeinrichtung der eingangs genannten Art mit einem in dem Gehäuse drehfest angeordneten Klinkenring gelöst; der Klinkenring ist mit einer Anzahl von Vorsprüngen ausgebildet, die in einen seitens des Kettenrads vorgesehenen Zahnkranz von innen her eingreifen und die Bewegung des Kettenrads in die genannte Gegenrichtung hemmen.

Durch diese Lösung ergibt sich eine einfache Realisierung der Sperrwirkung in nur eine Drehrichtung ("Ratsche"), die sich in einer verbesserten Sicherheit und Robustheit äußert. Außerdem sind die mechanischen Komponenten durch die Einbeziehung in einen innerhalb des Kettenrads gelegenen Raumes besser geschützt, und die Vorrichtung ist insgesamt kompakter.

In einer bevorzugten Ausführungsform der Erfindung ist der Zahnkranz als Innenzahnkranz realisiert und der Klinkenring ist in gleicher Höhe - in axialer Richtung gesehen - wie der Innenzahnkranz angeordnet.

Des Weiteren ist es vorteilhaft, wenn die Vorsprünge des Klinkenrings regelmäßig um dessen Umfang angeordnet sind.

Um ein Entriegeln der Kette zur Bewegung in beide Richtungen zu ermöglichen, eignet sich ein Entriegelelement, das in axialer Richtung gegen den Klinkenring bewegbar ist - insbesondere gegen den Ringkörper des Klinkenrings - und das bei Bewegung zum Klinkenring hin ein Ausweichen des Klinkenrings nach innen bewirkt, wobei diese Ausweichbewegung sich auf die Vorsprünge überträgt und diese aus dem Bereich des Zahnkranzes gezogen werden. Das Ausweichen des Klinkenrings kann günstiger Weise mit einer elastischen Verformung des Ringkörpers des Klinkenrings einhergehen, was ein automatisches Rückstellen in die Sperrposition ergibt.

Um ein Herausfallen der Kette sicher zu unterbinden, ist es günstig, wenn das Gehäuse außenseitig entlang eines Umfangsabschnitts eine Kettenführung zum Abstützen der Kettenglieder der Kette aufweist.

Die Erfindung samt ihren Vorzügen und vorteilhaften Ausgestaltungen wird im Folgenden anhand zweier nicht einschränkender Ausführungsbeispiele näher erläutert, die in den beigefügten Zeichnungen dargestellt sind. Die Figuren zeigen
- Fig.1: eine erste Umlenkrolle in einer Schrägansicht auf die Taschen des Kettenrads,
- Fig. 2a und 2b: zwei Ansichten der Umlenkrolle der Fig.1 auf die Taschen des Kettenrads,
- Fig. 3: eine explodierte Darstellung der Umlenkrolle der Fig.1.;
- Fig.4: den Sperrmechanismus des Kettenrads in einer Schnittansicht entlang der Ebene A-A der Fig. 2b;
- Fig. 5 bis 8: entsprechende Darstellungen einer zweiten Umlenkrolle.

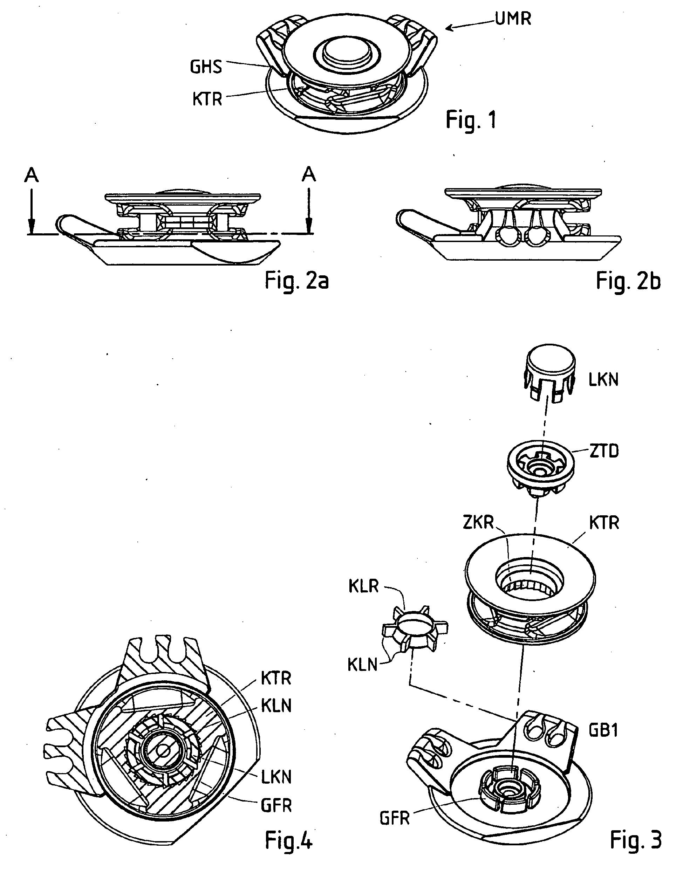

Gemäß Fig. 1, 2a und 2b weist eine erfindungsgemäße Umlenkrolle UMR ein in einem Gehäuse GHS gelagertes Kettenrad KTR auf. Das Kettenrad KTR weist nach an sich bekannter Art Taschen zur Aufnahme der einzelnen Kettenglieder auf, sodass eine in die Umlenkrolle UMR (nicht gezeigte) eingelegte Kette nur gemeinsam mit dem Kettenrad bewegt werden kann.

Wie aus Fig. 3 ersichtlich ist, besteht das Gehäuse GHS aus einem Gehäusebodenteil GB1, dessen Innenseite mit Ringführungen (z.B. Ringnuten bzw. Ringleisten) ausgestattet ist, die zusammen mit entsprechenden Strukturen in der unteren Stirnfläche des Kettenrads der drehbaren Lagerung des Kettenrads KTR dienen; in diesem Ausführungsbeispiel sind die Ringführungen GFR als durchbrochene Ringleiste ausgebildet. Ein Zentrierdorn ZTD ist im Mittelteil des Gehäusebodens GB1 formschlüssig mit diesem verbunden, und bildet so eine Achse, um die das Kettenrad KTR (das zu diesem Zweck eine Bohrung längs seiner Achse aufweist) umlaufen kann; zugleich hält der Zentrierdorn ZTD das Kettenrad in seiner Position im Gehäuseboden GB1. An der Außenseite des Gehäuses - hier des Gehäusebodens GHB - können auch je nach Bedarf Halteelemente zur Befestigung eines anderen Ketten- oder Seilstranges vorhanden sein, beispielsweise Ösen zum Einhängen eines Zugstranges oder eines Hakens.

Wie bereits erwähnt, wird durch die Umlenkrolle UMR eine Spannkette (nicht gezeigt) geführt, die um einen Winkel von z.B. ungefähr 90° oder 180° umgelenkt wird. Diese Kette kann in der Umlenkrolle nur in eine Richtung bewegt werden; in die entgegengesetzte Richtung sperrt das Kettenrad KTR. Dies wird mithilfe eines vorzugsweise in der Innenseite des Kettenrads vorgesehenen Zahnkranzes ZKR erreicht, der mit einem innerhalb des Zahnkranzes auf gleicher axialer Höhe befindlichen Klinkenrings KLR zusammenwirkt. Der Klinkenring KLR ist in dem Gehäuse drehfest angeordnet - hier im Gehäuseboden, der Fortsätze zum Halten des Klinkenrings aufweist, - und weist in regelmäßigen Abständen Vorsprünge in der Form von Armen oder Nasen KLN auf, die jeweils von innen in den Zahnkranz eingreifen und dem Klinkenring eine Stern-ähnliche Form geben.

Fig. 4 zeigt den aus Zahnkranz ZKR und Klinkenring KLR bzw. Klinkennasen KLN gebildeten Sperrmechanismus in einer Schnittansicht längs einer Ebene senkrecht zur Drehachse (Ebene A-A der Fig. 2a). Die Flanken des asymmetrisch gestalteten Zahnkranzes und die entsprechenden Gegenflanken der Klinkennasen KLN sind derart geneigt, dass sie bei einer Bewegung des Klinkenrads in die Freigaberichtung aneinander abgleiten, unter elastischer Verformung der aus einem elastischen Material bestehenden Klinkennasen. In der Gegenrichtung stützen die Gegenflanken, die im Wesentlichen radial verlaufen, des Zahnkranzes sich and den Klinkennasen ab, und die Bewegung ist gehemmt.

Die in den Fig. 1 bis 4 gezeigte Ausführungsform lässt es zu, dass die (nicht gezeigte) Kette der Umlenkrolle entnommen werden kann, ohne sie (bei Drehung des Kettenrads) auszufädeln. Dies kann dazu führen, dass die Kette, wenn sie infolge mangelnden Zugs nicht gespannt ist, aus der Umlenkrolle heraus fällt. Falls dies verhindert werden soll, können am Gehäuse Kettenführungen vorgesehen sein, die eine unerwünschte radiale Bewegung der Kette nach außen unterbinden.

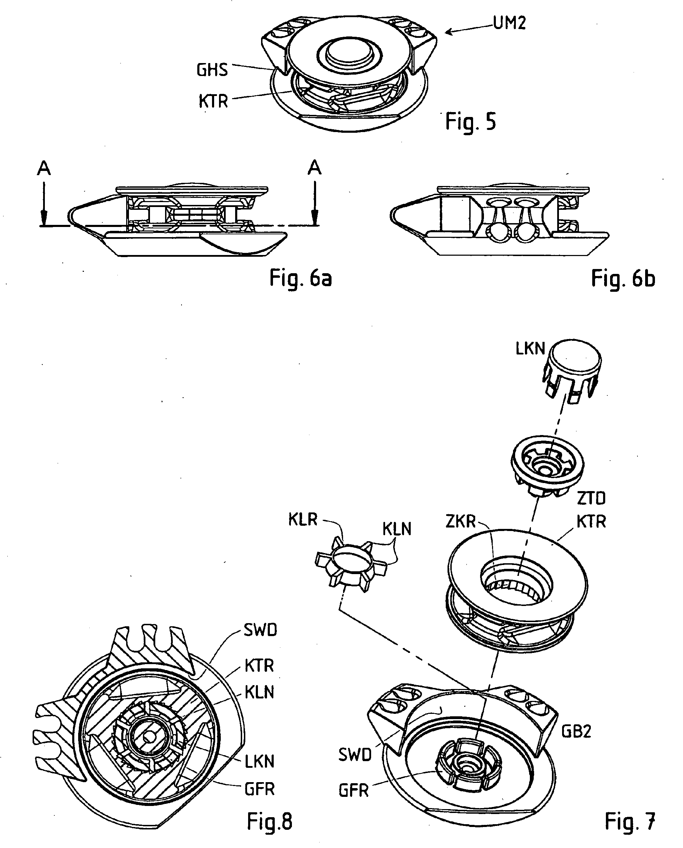

Eine erfindungsgemäße Umlenkrolle UM2 mit einer Kettenführung ist in den Fig. 5 bis 8 gezeigt. Das Gehäusebodenteil GB2 weist entlang eines Umfangabschnitts eine Seitenwand SWD auf, die die in den Kettentaschen stehenden - also im Wesentlichen parallel zum Boden orientierten - Kettenglieder nach außen hin abstützt. Die Seitenwand SWD kann mit den Halteelementen wie gezeigt einstückig geformt sein oder, in einer Variante, als davon getrennter Teil des Gehäuses ausgebildet sein. In übriger Hinsicht entspricht dieses Ausführungsbeispiel jenem der Fig. 1 bis 4 und es gilt das dort Gesagte entsprechend.

Um - insbesondere bei der zweiten Ausführungsform UM2, bei der die Kette nicht seitlich entnehmbar ist, vgl. Fig. 7 und 8 - ein Ausfädeln der Kette auch in der Sperrrichtung zu ermöglichen, kann die Umlenkrolle mit einem Löseknopf LKN ausgestattet sein, der als Entriegelelement dient. Dieser ist beispielsweise in dem Zentrierdorn ZTD eingesetzt und weist eine Anzahl von Fortsätzen auf, die sich parallel zur Achse des Kettenrads gegen den Ringkörper des Klinkenrings KLR erstrecken. Die Fortsätze verlaufen beispielsweise durch um die Achse angeordnete Öffnungen im Oberteil des Zentrierdorns ZTD und weisen an der Außenseite eine umlaufende Rippe auf, die den Löseknopf LKN im Zentrierdorn ZTD halten. Wenn der Löseknopf gegen den Zentrierdorn gedrückt wird, drücken die Fortsätze auf den Ringkörper, der dadurch deformiert wird und nach innen unter elastischer Deformierung ausweicht. Dies zieht die Klinkennasen KLN soweit nach innen, dass sie nicht mehr in den Zahnkranz ZKR eingreifen; somit ist die Bewegung des Kettenrads in beide Richtungen entriegelt.

Wenn der Löseknopf LKN und in Folge der Ringkörper des Klinkenrings KLR entlastet ist, geht dieser elastisch in die Grundform zurück, sodass die Sperrung der Kettenradbwegung in einer Richtung wieder eintritt.

Es liegt auf der Hand, dass die Erfindung auch andere Ausgestaltung als die hier gezeigten zulässt. Insbesondere können der Zahnkranz und das Klinkenrad auch an anderer Stelle hinsichtlich des Kettenrads angeordnet sein.

## Patentansprüche

1. Umlenkeinrichtung (UMR) für eine Gleitschutzkette mit einem in einem Gehäuse (GHS) drehbar gelagerten Kettenrad (KTR) für eine darin einlegbare Kette, dessen Bewegung in eine Richtung möglich, jedoch in der Gegenrichtung blockiert ist,
**gekennzeichnet durch**
einen in dem Gehäuse drehfest angeordneten Klinkenring (KLR) mit einer Anzahl von Vorsprüngen (KLN), die in ein seitens des Kettenrads (KTR) vorgesehenen Zahnkranzes (ZKR) von innen her eingreifen und die Bewegung des Kettenrads in die genannte Gegenrichtung hemmen.

2. Umlenkvorrichtung nach Anspruch 1, **dadurch gekennzeichnet, dass** der Zahnkranz (ZKR) als Innenzahnkranz realisiert ist und der Klinkenring (KLR) in gleicher Höhe wie der Innenzahnkranz angeordnet ist.

3. Umlenkvorrichtung nach Anspruch 1 oder 2, **dadurch gekennzeichnet, dass** die Vorsprünge (KLN) des Klinkenrings regelmäßig um dessen Umfang angeordnet sind.

4. Umlenkvorrichtung nach einem der Ansprüche 1 bis 3, **gekennzeichnet durch** ein Entriegelelement (LKN), das in axialer Richtung gegen den Klinkenring (KLR) bewegbar ist und das bei Bewegung zum Klinkenring hin eine Ausweichen des Klinkenrings nach innen bewirkt, wobei diese Ausweichbewegung sich auf die Vorsprünge (KLN) überträgt und diese aus dem Bereich des Zahnkranzes (ZKR) gezogen werden.

5. Umlenkvorrichtung nach Anspruch 4, **dadurch gekennzeichnet, dass** das Ausweichen des Klinkenrings (KLR) mit elastischer Verformung eines Ringkörpers des Klinkenrings verbunden ist.

6. Umlenkvorrichtung nach einem der Ansprüche 1 bis 5, **dadurch gekennzeichnet, dass** das Gehäuse (GHS) außenseitig entlang eines Umfangsabschnitts eine Kettenführung (SWD) zum Abstützen der Kettenglieder der Kette aufweist.

## Claims

1. A deflection device (UMR) for a non-skid chain having a chain wheel (CTR) rotatably mounted in a housing (GHS) for accommodation of a chain capable of being inserted therein, movement thereof being possible in one direction but blocked in the opposite direction,
**characterized by**
a ratchet ring (KLR) non-rotatably disposed in said housing and having a number of protrusions (KLN) adapted to engage the inside of a gear ring (ZKR) provided at said chain wheel (CTR) and thus to prevent movement of said chain wheel in said opposite direction.

2. The deflection device as defined in claim 1, **characterized in that** said gear ring (ZKR) is an inside toothed gear ring and said ratchet ring (KLR) is disposed at the same level as said inside toothed gear ring.

3. The deflection device as defined in claim 1 or claim 2, **characterized in that** said protrusions (KLN) of said ratchet ring are regularly spaced around its circumference.

4. The deflection device as defmed in any one of claims 1 to 3, **characterized by** a release element (LKN) which can be moved in the axial direction toward said ratchet ring (KLR) and which, when moved toward said ratchet ring, causes the latter to give way toward the interior, and this evasive movement is transferred to said protrusions (KLN), which are thus pulled away from the vicinity of said gear ring (ZKR).

5. The deflection device as defined in claim 4, **characterized in that** the evasive movement of said ratchet ring (KLR) is accompanied by elastic deformation of an annular member of said ratchet ring.

6. The deflection device as defined in any one of claims 1 to 5, **characterized in that** said housing (GHS) has, on its outside along a circumferential section thereof, a chain guide (SWD) adapted to support the links of said chain.

## Revendications

1. Dispositif de renvoi (UMR) pour une chaîne antidérapante comprenant une roue à chaîne (KTR) logée de façon rotative dans un boîtier (GHS) pour une chaîne introduite à l'intérieur, dont le déplacement dans une direction est possible, mais est bloquée dans la direction opposée,
**caractérisé par**
une bague à cliquets (KLR) disposée de façon solidaire en rotation dans le boîtier avec un certain nombre de parties saillantes (KLN) qui s'engagent par l'intérieur dans une couronne dentée (ZKR) prévue à de la roue à chaîne (KTR) et empêchent le déplacement de la roue à chaîne dans ladite direction opposée.

2. Dispositif de renvoi selon la revendication 1, **caractérisé en ce que** la couronne dentée (ZKR) est réalisée sous forme de couronne dentée intérieure et la bague à cliquets (KLR) est disposée à la même hauteur que la roue dentée intérieure.

3. Dispositif de renvoi selon la revendication 1 ou 2, **caractérisé en ce que** les parties saillantes (KLN) de la bague à cliquets sont disposées régulièrement autour de sa périphérie.

4. Dispositif de renvoi selon l'une quelconque des revendications 1 à 3, **caractérisé par** un élément de déverrouillage (LKN), qui peut être déplacé dans la direction axiale contre la bague à cliquets (KLR) et qui, lors du déplacement en direction de la bague à cliquets, entraîne une déviation de la bague à cliquets vers l'intérieur, ce mouvement de déviation se transmettant aux parties saillantes (KLN) et tirant ces parties hors de la zone de la couronne dentée (ZKR).

5. Dispositif de renvoi selon la revendication 4, **caractérisé en ce que** la déviation de la bague à cliquets (KLR) est liée à la déformation élastique d'un corps annulaire de la bague à cliquets.

6. Dispositif de renvoi selon l'une quelconque des revendications 1 à 5, **caractérisé en ce que** le boîtier (GHS) présente côté extérieur, le long d'une partie périphérique, un guide-chaîne (SWD) pour le soutien des maillons de la chaîne.
